(19)

Europäisches
Patentamt
European
Patent Office
Office européen
des brevets

(11) **EP 3 693 600 A1**

(12) **EUROPEAN PATENT APPLICATION**

(43) Date of publication:
**12.08.2020 Bulletin 2020/33**

(51) Int Cl.:
***F03D 17/00*** *(2016.01)*

(21) Application number: **19156230.5**

(22) Date of filing: **08.02.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
A/S
7330 Brande (DK)**

(72) Inventor: **The designation of the inventor has not
yet been filed**

(74) Representative: **Aspacher, Karl-Georg
Siemens AG
CT IP SV
Postfach 22 16 34
D-80506 München (DE)**

(54) **A METHOD FOR COMPUTER-IMPLEMENTED MONITORING OF A WIND TURBINE**

(57)   The invention refers to a method for computer-implemented monitoring of a wind turbine (1), the wind turbine (1) comprising a tower (2), a nacelle (3), a hub (4) and a plurality of blades (5A, 5B, 5C), where for each blade (5A, 5B, 5C) an activity signal ($f_A$, $f_B$, $f_C$) is detected at subsequent time points, where for each time point of at least some of the subsequent time points, the following steps are performed:
a) predicting an activity signal ($f_{AP}$, $f_{BP}$, $f_{CP}$) of each blade (5A, 5B, 5C) at the respective time point by a separate data-driven model (DM1, DM2, DM3), where the predicted activity signal ($f_{AP}$, $f_{BP}$, $f_{CP}$) is an output value of the respective data-driven model (DM1, DM2, DM3) and where one or more detected activity signals ($f_A$, $f_B$, $f_C$) of blades (5A, 5B, 5C) other than the blade (5A, 5B, 5C) whose activity signal ($f_{AP}$, $f_{BP}$, $f_{CP}$) is the output value are input values of the respective data-driven model (5A, 5B, 5C);
b) determining for each data-driven model (DM1, DM2, DM3) a residual ($re_A$, $re_B$, $re_C$) between the predicted activity signal ($f_{AP}$, $f_{BP}$, $f_{CP}$) and the detected activity signal ($f_A$, $f_B$, $f_C$);
c) checking a threshold criterion for one or more variables ($va_1$, $va_2$, $va_3$), where the values of the one or more variables ($va_1$, $va_2$, $va_3$) depend on the residuals ($re_A$, $re_B$, $re_C$) for all data-driven models ($re_A$, $re_B$, $re_C$);
d) determining an abnormal operation state (AS) of the turbine (1), if the threshold criterion is fulfilled.

FIG 3

EP 3 693 600 A1

**Description**

The invention refers to a method and a system for computer-implemented monitoring of a wind turbine.

The invention lies in the field of structural health monitoring in order to determine the condition of a structure. With respect to wind turbines, it is known that one method of diagnosing the state of the turbine is by the analysis of the vibrations of the rotating blades.

Document US 2010/0209243 A1 describes a method for monitoring blade frequencies of a wind turbine where the blade frequencies are extracted by analyzing the signals of an acceleration sensor positioned within the nacelle of the wind turbine. In this monitoring method, frequency differences between the blade frequencies of different blades are calculated and, in the case that one or more of the relative frequencies exceed a preset threshold, an alarm is generated.

It is an object of the invention to provide a method and a system for computer-implemented monitoring of a wind turbine resulting in an enhanced detection of an abnormal behavior of the turbine.

This object is solved by the method according to claim 1 and the system according to claim 12. Preferred embodiments of the invention are defined in the dependent claims.

The invention provides a method for computer-implemented monitoring of a wind turbine, where the wind turbine comprises a tower, a nacelle, a hub and a plurality of blades, e.g. three blades. In this method, an activity signal is detected at subsequent time points for each blade. In a preferred embodiment, the activity signals are blade frequencies resulting from vibrations of the respective blades. However, the activity signals may also refer to other kinds of signals detected for the respective blades, such as strain signals or moment signals. Strain signals may e.g. be detected by fibre optic strain gauges and moment signals may e.g. be calculated from detected strain signals. Furthermore, an activity signal may refer to a displacement or an acceleration of the corresponding blade, preferably in the edgewise direction of the blade. The term detection is to be interpreted broadly. Particularly, the activity signal needs not be detected directly by a measurement but can also be derived from one or more measurements, e.g. from the measured signals of a G-sensor as described in the above-mentioned document US 2010/0209243 A1. In another embodiment, the activity signals in the form of blade frequencies may be detected by blade load sensors, where the blade frequencies are e.g. obtained by a phase lock loop (PLL) frequency estimation of the signals from the blade load sensors.

In the method of the invention, the following steps are performed for each time point of at least some of the subsequent time points.

In a step a), an activity signal of each blade at the respective time point is predicted by a separate data-driven model, i.e. there is a separate data-driven model for each blade. The predicted activity signal is an output value of the respective data-driven model. One or more detected activity signals of blades other than the blade whose activity signal is the output value are input values of the respective data-driven model. The respective data-driven model has been learned by machine learning using training data comprising known input and output activity signals occurred in the past during an undamaged state of the wind turbine. In a preferred embodiment, the learning of the data-driven model may be continued during monitoring of the wind turbine. In this case, the data-driven models are updated by machine learning at given time points using training data newly acquired during the operation of the wind turbine.

In a step b) of the method of the invention, a residual between the predicted activity signal and the detected activity signal is determined for each data-driven model; e.g., the residual may be the difference or the absolute value of the difference between the predicted and the detected activity signals. Moreover, a residual may also refer to the square of this difference.

In a step c) of the method according to the invention, a threshold criterion for one or more variables is checked, where the values of the one or more variables depend on the residuals for all data-driven models. This means that the values of the one or more variables as a whole depend on the residuals for all data-driven models. In other words, the value of a single variable may only depend on some residuals and needs not depend on the residuals for all data-driven models.

Based on the threshold criterion, a threshold is defined for each variable, where the threshold criterion is fulfilled if the value of any variable (i.e. at least one variable) exceeds the defined threshold. An appropriate choice of the thresholds lies within the expertise of a skilled person or can be determined by experiments. In a preferred embodiment, the thresholds depend on the standard deviation of a frequency distribution of a time series of variable values as described below. In case that the value of any variable is equal to the threshold, this can be regarded as a case where the threshold criterion is fulfilled or, alternatively, as a case where the threshold criterion is not fulfilled.

In a step d) of the method according to the invention, an abnormal operation state of the turbine is determined if the threshold criterion is fulfilled.

The invention is based on the finding that a prediction of several learned data-driven models outputting the activity signal of a blade by inputs of activity signals of one or more other blades provides a reliable detection of an abnormal turbine state which is an indication of a damage which may result in a failure of the wind turbine in the near future.

In a preferred embodiment, the detected activity signals are blade frequencies and preferably blade edge frequencies resulting from the vibrations in the edgewise direction of the respective blades. Preferably, the respective blade edge frequency is the fundamental frequency of the vibrations in the edgewise direction of the respective blade.

In another preferred embodiment, the threshold for a respective variable depends on the standard deviation of a frequency distribution of a time series of values of the respective variable in the past, where the time interval of the time series preferably does not cover the time interval of the training period of the data-driven models. Preferably, the threshold lies between the standard deviation multiplied by two and the standard deviation multiplied by three. In a particularly preferred embodiment, the threshold is the standard deviation multiplied by three. The above interval for choosing the respective threshold provides a particularly high reliability in detecting abnormal operation states.

In another preferred embodiment, the one or more input values of the respective data-driven model comprise, additionally to the one or more detected activity signals of blades other than the blade which activity signal is the output value, one or more further environmental and/or operational parameters of the wind turbine, particularly an ambient temperature around the wind turbine and/or a power output of the wind turbine and/or a rotating speed of the wind turbine rotor and/or an azimuth angle of the respective blade and/or a pitch angle of the respective blade. The terms azimuth angle and pitch angle are well-known for a skilled person. The azimuth angle refers to the angle of the blade in a plane spanned by the blades of the turbine and the pitch angle refers to the angle the blade is facing towards the wind. The use of further inputs improves the fidelity of the predictions made by the data-driven models.

Any known data-driven models may be used in the method of the invention; e.g., the respective data-driven models may be based on Gaussian processes and/or on a (artificial) neural network structure.

In another embodiment of the invention, an alarm is recorded (i.e. stored in a corresponding storage) and/or an alarm is output via a user interface if an abnormal operation state of the turbine is determined, i.e. in case that the threshold criterion is fulfilled.

In a straightforward implementation of the invention, the one or more variables processed in step c) of the method correspond to the residuals; i.e., the variables are identical with the residuals.

In another particular preferred embodiment, a trend removal for removing a common trend in the time series of the residuals is applied to the residuals determined in step b), the result of the trend removal being the one or more variables processed in step c). Methods for trend removal are well-known for a skilled person; e.g., the trend removal may be based on cointegration, Auto-Associative Neural Networks or Principal Component Analysis.

In a preferred variant of the embodiment, the trend removal is based on one or more cointegrated vectors, where the multiplication of the one or more cointegrated vectors with the residuals determined in step b) results in the one or more variables. Each cointegrating vector has been derived by cointegration applied to a time series of at least some residuals for different data-driven models occurred in the past during an undamaged state of the wind turbine. The time interval considered for cointegration is preferably another time interval than the time interval comprising the data-driven model training period.

In another variant of the invention, the trend removal is based on one or more transformations applied to the residuals determined in step b) and resulting in the one or more variables, each transformation having been derived by a Principal Component Analysis applied to a time series of at least two residuals for different data-driven models occurred in the past during an undamaged state of the wind turbine. The time interval of this time series is preferably another time interval than the time interval comprising the data-driven model training period.

In another particularly preferred embodiment, all possible pairs of residuals for different data-driven models are each processed by a separate trend removal procedure. This embodiment provides further information about the cause of a damage. Particularly, the blade which is damaged may be identified.

Besides the above method, the invention refers to a system for computer-implemented monitoring of a wind turbine, the wind turbine comprising a tower, a nacelle, a hub and a plurality of blades, where for each blade an activity signal of the blade is detected at subsequent time points, where the system is configured to perform a method according to the invention or a method according to one or more preferred embodiments of the invention.

The invention also refers to a computer program product with program code, which is stored on a non-transitory machine-readable carrier, for carrying out a method according to the invention or a method according to one or more preferred embodiments of the invention, when the program code is executed on a computer.

The invention also refers to a computer program with program code for carrying out a method according to the invention or a method according to one or more preferred embodiments of the invention, when the program code is executed on a computer.

In the following, an embodiment of the invention will be described in detail with respect to the accompanying drawings wherein:

Fig. 1    shows a wind turbine in a side view monitored based on an embodiment of the invention;

Fig. 2    shows the wind turbine of Fig. 1 in a front view; and

Fig. 3    is an illustration of the steps performed for monitoring the turbine of Fig. 1 based on an embodiment of the invention.

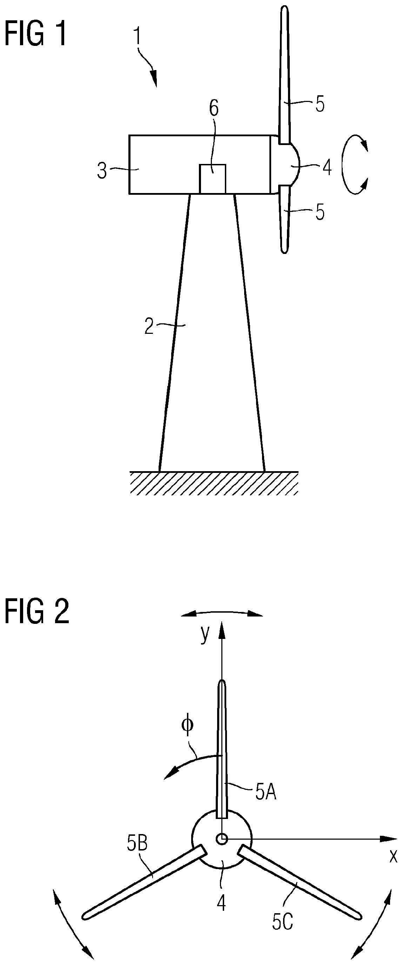

In the following, the invention will be described based on a monitoring system for a wind turbine shown in Fig. 1 and Fig. 2. This turbine is designated in Fig. 1 with reference numeral 1 and comprises a tower 2 on the top of which a nacelle 3 is arranged. The nacelle is connected to a hub 4 at which three rotating blades 5 are attached. This can be seen in the front view of Fig. 2. According to this view, the three rotating blades are designated with different reference numerals 5A, 5B and 5C. These blades are offset by an angle of 120° and rotate around the hub. The position of the blades is given by the azimuth angle $\phi$.

In Fig. 2, the flapwise direction extends perpendicular to the plane spanned by the x-axis and y-axis whereas the edgewise direction is the side-to-side direction of the blade edges as indicated by double arrows in Fig. 2. The blades are driven by wind resulting in the production of electric energy by an electric machine (not shown) rotated by the blades. The wind excitation on the turbine causes multiple vibrations on the turbine structures, including the blade in the edgewise direction as indicated by the double arrows. In the embodiment described herein, those edgewise vibrations are analyzed in order to determine the condition of the wind turbine.

In the wind turbine of Fig. 1 and Fig. 2, the vibrations of the blades in the edgewise direction are detected by a 3D acceleration sensor 6 also named G-sensor which is positioned within the nacelle 3. By analyzing the signals of this sensor, the fundamental blade edge frequency of the edgewise vibrations of each blade can be extracted. Methods for extracting those blade edge frequencies are well-known and use e.g. a PLL frequency estimation (PLL = Phased Locked Loop). Document US 2010/0209243 A1 describes a method for obtaining the blade edge frequencies by the signals of a G-sensor (a three-axis accelerometer). In the embodiment described herein, the fundamental blade edge frequencies are processed. However, the method may also be used with higher-order detected blade frequencies or other activity signals of the blades, such as strain signals or moment signals or displacement signals or acceleration signals of the corresponding blade as mentioned above.

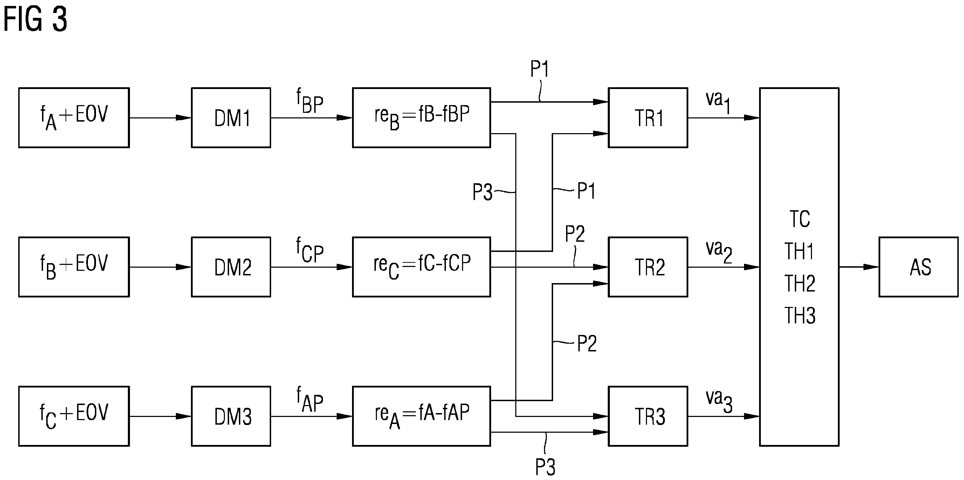

Fig. 3 shows the steps which are performed by an embodiment of a monitoring system for monitoring the wind turbine 1 shown in Fig. 1 and Fig. 2. At subsequent time points, the blade edge frequency of each blade 5A, 5B, 5C is detected by analyzing the signals of the G-sensor. Those detected frequencies are designated as $f_A$ for blade 5A, $f_B$ for blade 5B and $f_C$ for blade 5C. Moreover, at the respective time points at which the blade frequencies are detected, further environmental and operational variables of the turbine are detected. Those variables are designated in total by the term EOV in Fig. 3. The variables EOV comprise at least one and preferably all of the following variables:

- the ambient temperature around the wind turbine;
- the power output of the wind turbine;
- a rotating speed of the wind turbine rotor;
- the azimuth angle $\phi$ of the respective blade;
- the pitch angle of the respective blade (i.e. the angle the blade is facing towards the wind).

For each of the detected blade edge frequencies together with the environmental and operational variables EOV, there exists a data-driven model. Those models are designated as DM1, DM2 and DM3. The data-driven model DM1 receives as inputs the blade edge frequency $f_A$ together with the variables EOV. The data-driven model DM2 receives as inputs the blade edge frequency $f_B$ together with the variables EOV. The data-driven model DM3 receives as inputs the blade edge frequency $f_C$ together with the variables EOV.

The data-driven model DM1 is assigned to the blade 5B and predicts its blade edge frequency, i.e. the data-driven model DM1 outputs the predicted blade edge frequency $f_{BP}$ of the blade 5B. The data-driven model DM2 is assigned to the blade 5C and outputs the predicted blade edge frequency $f_{CP}$ of the blade 5C. The data-driven model DM3 is assigned to the blade 5A and outputs the predicted blade edge frequency $f_{AP}$ of the blade 5A. The data-driven models DM1 to DM3 refer to well-known models which are learned by training data. In the embodiment described herein, the data-driven models are based on Gaussian processes.

The data-driven models have been learned before by machine learning based on training data of past operational values which have actually occurred (i.e. which have actually been detected) during operation of the wind turbine. Those training data form a time series of training data sets, where each training data set comprises the blade edge frequency and the environmental and operational variables input to the corresponding data-driven model as well as the blade edge frequency forming the output of the respective data-driven model. In order to distinguish between a healthy state and a damaged state of the turbine, the training data were only collected during a healthy state of the turbine. The time interval of the collected training data may e.g. be one year.

Based on the learned data-driven models DM1, DM2 and DM3 shown in Fig. 3, the respective blade edge frequencies of the blades, namely $f_{BP}$, $f_{CP}$ and $f_{AP}$, are predicted for a given time point. At this time point, the actual blade edge frequency is also detected by analyzing the signals of the G-sensor 6. In a next step, the residual between the corresponding predicted blade edge frequency and the actual blade edge frequency is determined. In the embodiment described herein, this residual refers to the difference between the detected and predicted blade edge frequencies. However, the residual can also refer to the absolute value of this difference or to the square of this difference. In the embodiment of Fig. 3, the residuals are determined as follows:

$$re_B = f_B - f_{BP}$$

$$re_C = f_C - f_{CP}$$

$$re_A = f_A - f_{AP}$$

Residual $re_B$ is with respect to the prediction of the blade edge frequency of blade 5B provided by data-driven model DM1. Residual $re_C$ is with respect to the prediction of the blade edge frequency of blade 5C provided by the data-driven model DM2. Residual $re_A$ is with respect to the prediction of the blade edge frequency of blade 5A provided by data-driven model DM3.

An essential feature of the embodiment of Fig. 3 resides in the fact that the predicted blade edge frequencies output by the models use a blade frequency of another blade as an input. If there are no changes to the blade properties, the predicted frequencies will remain close to the actual detected frequencies so that the residual errors will remain low. If there are changes between the predicted frequencies and the actual detected frequencies, the residual will grow which means that there has been a change in the property of the blades which is an indication of the presence of damage.

In a straightforward implementation of the invention, the residual errors may be used directly in order to identify an abnormal state of the wind turbine, i.e. a state which indicates a damage which may result in a failure of the turbine in the near future. To do so, a threshold may be defined directly for each residual and, in case that any of the residuals exceeds the threshold, an abnormal state will be detected. However, in order to enhance the diagnosis of the turbine, a normalization technique is implemented in the embodiment of Fig. 3. The aim of this normalization technique is to remove common trends between residuals. The normalization technique is based on the fact that non-stationarity is very common during the operation of a wind turbine since wind speeds, temperatures and other environmental and operational variables keep changing over the time. As those non-statio-narities affect each blade equally, this allows the removal of a common trend.

In the embodiment of Fig. 3, three trend removal methods TR1, TR2 and TR3 (i.e. three instances of the same trend removal procedure) are used. Each of those methods provides a cointegrating vector which has been determined beforehand based on the well-known technique of cointegration. Cointegration is a common method in order to remove trends from data. The cointegration resulting in the cointegrating vectors of the trend removal methods TR1, TR2 and TR3 will be described later on in more detail.

In each of the trend removal methods TR1, TR2 and TR3, a vector having two entries of different residuals is processed. In other words, in the trend removal method TR1, a vector comprising the residuals $re_B$ and $re_C$ is processed, as indicated by arrows P1. In the trend removal method TR2, a vector comprising the residuals $re_C$ and $re_A$ is processed, as indicated by arrows P2. In the trend removal method TR3, a vector comprising the residuals $re_B$ and $re_A$ is processed, as indicated by arrows P3. In the corresponding trend removal method, those vectors of residuals are multiplied with the cointegrating vector of the respective method.

For determining the respective cointegrating vectors, a time series of past pairs of residuals occurred during a normal operation of the turbine (i.e. in an undamaged state) are processed by cointegration. This cointegration will be described in the following where vectors are denoted in lower-case bold fonts and matrices are denoted in uppercase bold fonts. Cointegration is a well-known method. A description of cointegration is given in document Cross, Elizabeth J., Keith Worden, and Qian Chen. "Cointegration: a novel approach for the removal of environmental trends in structural health monitoring data." Proceedings of the Royal Society of London A: Mathematical, Physical and Engineering Sciences. The Royal Society, 2011.

Let $x_t$ be a multivariate set of non-stationary measurements over time (the time is indicated by index t). In the embodiment of Fig. 3, those measurements refer to a time series of pairs of residuals determined in a past time interval which preferably is another time interval than the time interval from which the training data of the data-driven models DM1, DM2 and DM3 originate. When using the terminology of Fig. 3, the vector $x_t$ is for the trend removal method TR1 a vector comprising the residuals $re_B$ and $re_C$ at the corresponding time point, the vector $x_t$ is for the trend removal method TR2 a vector comprising the residuals $re_A$ and $re_C$ at the corresponding time point, and the vector $x_t$ is for the trend removal method TR3 a vector comprising the residuals $re_A$ and $re_B$ at the corresponding time point.

The measurements $x_t$ are cointegrated if there exists a vector $b$ that would yield a stationary signal $z_t$ via,

$$z_t = \boldsymbol{b}^T \boldsymbol{x}_t \qquad (1)$$

If such a solution exists, $\boldsymbol{b}$ is known as the cointegrating vector. This vector is determined beforehand in order to be used in the respective trend removal methods TR1, TR2 and TR3. Depending on the nature of a given set of non-stationary time series, there may exist more than one cointegrating vector, unique to uncertainty.

Prior to identifying the cointegrating vector, there exist some prerequisites. In addition to the fact that the signals in $\boldsymbol{x}_t$ should share common trends, they should also be integrated to the same order. Here, the term "integrated to the same order" means that a non-stationary signal should be differenced n times before it becomes stationary and is denoted I(n); n is known as the order of integration.

In order to determine what the order of integration for a set of non-stationary signals is, a unit root test must be carried out. A unit root implies that the signal is intrinsically non-stationary. On the other hand, if the root is less than one, the signal is stationary, and if it is greater than one, the signal is a divergent process. The Augmented Dickey Fuller (ADF) test is commonly used to test for a unit root, where the null hypothesis is that the characteristic equation of a signal under consideration has at least one unit root. In the ADF test, the signal is fitted to a model of the form,

$$\Delta x_t = \alpha x_{t-1} + \sum_{j=1}^{p-1} \beta_j \Delta x_{t-j} + \varepsilon_t \quad (2)$$

where $\Delta \boldsymbol{x}_t = \boldsymbol{x}_t - \boldsymbol{x}_{t-1}$, and $\Delta \boldsymbol{x}_{t-j} = \boldsymbol{x}_{t-j} - \boldsymbol{x}_{t-j-1}$. The number of lags, $p$ allows for high order autoregressive processes, and needs to be chosen such that $\varepsilon_t$ becomes a white noise process. The Akaike, Bayesian, or Hannan-Quinn information criteria (AIC, BIC, or HQIC, respectively) can aid in finding the optimum number of lags. In the embodiment described herein, the AIC was used. The coefficient $\alpha$ is the focal point of the ADF test. In principle, if $\alpha$ is 0, the signal is intrinsically non-stationary and hence contains a unit root. In reality, it is impossible for $\alpha$ to be precisely 0, and hence the problem is to determine whether $\alpha$ is statistically close to 0. This is performed by calculating a test statistic given by equation (3), and comparing it to critical ADF test statistic values. The test statistic is calculated using,

$$\hat{t} = \frac{\hat{\alpha}}{se(\hat{\alpha})} \qquad (3)$$

where $\hat{\alpha}$ is the estimate of $\alpha$ found using least squares, and $se(\hat{\alpha})$ is its standard error. The null hypothesis of the ADF test is accepted if $\hat{t} > t_c$, where $t_c$ is the critical value found in the ADF test statistics tables. In this case, the set of solutions of the characteristic equation of the signal contains a unit root. The process is repeated once more for the differenced signal $\Delta \boldsymbol{x}_t$. In the second iteration, if the null hypothesis is rejected, then the original signal is non-stationary, and is integrated to order one, i.e. $I(1)$. In the event that the null hypothesis of the ADF test is accepted, the above process is repeated for further differenced signals until the order of integration of the signal is found.

Having evaluated the orders of integration for all the signals, the next task is to identify $\boldsymbol{b}$. In this process, only signals that are integrated of the same order can be used. There are several methods that can be employed to identify $\boldsymbol{b}$. These include the Engle-Granger approach and the Johansen procedure. In the embodiment described herein, the Johansen procedure is used. The Johansen procedure is concerned with only $I(1)$ signals, but there are methods to identify $\boldsymbol{b}$ for higher integrated orders. The following briefly details the Johansen procedure.

The Johansen procedure begins by fitting the signals into a vector autoregressive model, which can be stated as,

$$\boldsymbol{x}_t = \boldsymbol{M}_1 \boldsymbol{x}_{t-1} + \boldsymbol{M}_2 \boldsymbol{x}_{t-2} + \cdots + \boldsymbol{M}_p \boldsymbol{x}_{t-p} + \varepsilon_t$$

where $\boldsymbol{M}_1, \boldsymbol{M}_2, ..., \boldsymbol{M}_p$ are weight matrices $\boldsymbol{x}_{t-1}, \boldsymbol{x}_{t-2}, ..., \boldsymbol{x}_{t-p}$ are lag terms, and $\varepsilon_t$ is a Gaussian noise process. This step is preformed so that the model order, $p$ can be determined by a suitable information criterion, such as AIC, which will be used in the subsequent evaluations. The next step of the Johansen procedure is to fit the signals to a vector error correction model (VECM), which can be stated as,

$$\Delta \boldsymbol{x}_t = \boldsymbol{A}\boldsymbol{B}^T \boldsymbol{x}_{t-1} + \sum_{j=1}^{p-1} \theta_j \Delta \boldsymbol{x}_{t-j} + \varepsilon_t \qquad (4)$$

where $\Delta \boldsymbol{x}_t = \boldsymbol{x}_t - \boldsymbol{x}_{t-1}$, $\theta_j$ is a weight for the corresponding difference term, and $\boldsymbol{A}$ and $\boldsymbol{B}$ are matrices containing relevant weights. Of these two matrices, $\boldsymbol{B}$ is the most crucial, since it contains the potential cointegrating vectors $\boldsymbol{b}$. Equation

(4) needs to be manipulated further to extract **B**; this is broken down into two simpler regression,

$$\Delta x_t = \sum_{j=1}^{p-1} c_j \Delta x_{t-j} + r_{0t} \quad (5)$$

and

$$x_{t-1} = \sum_{j=1}^{p-1} d_j \Delta x_{t-j} + r_{1t} \quad (6)$$

The residuals, $r_{0t}$ and $r_{1t}$ are related as follows,

$$r_{0t} = AB^T r_{1t} + \varepsilon_t \quad (7)$$

Next, some product-moment matrices are defined,

$$S_{ij} = \frac{1}{N} \sum_{t=1}^{N} r_{it} r_{jt} \quad \text{for} \quad i,j = 0,1 \quad (8)$$

These product-moment matrices are then used to solve,

$$(\lambda_i S_{11} - S_{01}^T S_{00}^{-1} S_{01}) v_1 = 0 \quad (9)$$

Equation (9) is an eigenvalue problem, with eigenvectors $v_1$ and eigenvalues $\lambda_i$. The eigenvector corresponding to the largest eigenvalue in magnitude is the cointegrating vector **b** from the matrix **B** that provides the most stationary signal $z_t$ in equation (1). By multiplying this cointegrating vector in the respective trend removal methods TR1, TR2 and TR3 with the pair of residuals forming the input of the trend removal method, values of the variables $va_1$, $va_2$ and $va_3$ as shown in Fig. 3 are obtained.

The process of identifying the cointegrating vectors is carried out in a period when the data available originate from a wind turbine that is considered normal (or healthy). Once the cointegrating vectors are obtained, they should be kept unchanged, and new data should be projected onto these cointegrating vectors. If the wind turbine continues to be healthy, the signal $z_t$ will continue to be stationary. If, however, the wind turbine becomes damaged, the signal $z_t$ (i.e. the values of the variables $va_1$, $va_2$ and $va_3$) would become non-stationary.

As already mentioned above, the trend removal methods TR1, TR2 and TR3 provide values of variables $va_1$, $va_2$ and $va_3$. Those variables are subjected to a threshold criterion TC, where a threshold TH1 is defined for variable $va_1$, a threshold TH2 is defined for variable $va_2$ and a threshold TH3 is defined for variable $va_3$. In a preferred embodiment, the thresholds are determined based on a time series of past values of the respective variables $va_1$, $va_2$ and $va_3$ in a predetermined time interval. The time interval lies preferably outside the time interval used for training the data models and covers an operation of the wind turbine where the turbine is in a healthy state. The thresholds TH1, TH2 and TH3 are determined based on the standard deviation $\sigma$ of the frequency distribution of the values of the respective variables $va_1$, $va_2$ and $va_3$ in the considered time interval. Preferably, the values for TH1, TH2 and TH3 lie between $2\sigma$ and $3\sigma$ of the respective frequency distribution. This choice ensures a reliable detection of an abnormal state of the wind turbine.

The threshold criterion TC is applied to the respective variables $va_1$, $va_2$ and $va_3$. The threshold criterion is fulfilled if a value of any of the variables $va_1$, $va_2$ and $va_3$ exceeds the corresponding threshold TH1 (for variable $va_1$), TH2 (for variable $va_2$) and TH3 (for variable $va_3$). When exceeding the corresponding threshold, this is an indication that the predictions learned from a healthy state of the turbine are no longer correct, i.e. this is an indication of an abnormal or damage state of the turbine which may result in a failure of the turbine in the near future. This abnormal state is designated as AS in Fig. 3.

In case that the method of Fig. 3 determines an abnormal state of the turbine, this will result in an alarm which is recorded and also output via a user interface of the monitoring system so that an operator is informed about the deterioration of the wind turbine. Appropriate measures can be taken, e.g. during maintenance.

In the embodiment of Fig. 3, it is also recorded which threshold or thresholds are exceeded in case that the threshold criterion is fulfilled. This enables to identify in more detail the damage; e.g. in case that only the thresholds TH1 and TH2 are exceeded, this will indicate a damage with respect to the blade 5C.

The invention as described in the foregoing has several advantages. Particularly, the behavior of each blade in a wind turbine can be predicted, giving the performance of another blade, which forms a good baseline to compare with. Furthermore, non-stationary trends that can mask changes in blade properties are removed, resulting in an early and reliable damage detection of a turbine. Since fatigue damage/crack initiation and propagation occurs over a relatively long period of time, an abnormality can be determined very early with the method of the invention based on the training of several data-driven models over healthy state data. Furthermore, environmental and operational variables which tend to obfuscate damages can be taken into account in the corresponding data-driven models as input, resulting in a more reliable detection of abnormal states.

**Claims**

1. A method for computer-implemented monitoring of a wind turbine (1), the wind turbine (1) comprising a tower (2), a nacelle (3), a hub (4) and a plurality of blades (5A, 5B, 5C), where for each blade (5A, 5B, 5C) an activity signal ($f_A$, $f_B$, $f_C$) of the blade (5A, 5B, 5C) is detected at subsequent time points, where for each time point of at least some of the subsequent time points, the following steps are performed:

   a) predicting an activity signal ($f_{AP}$, $f_{BP}$, $f_{CP}$) of each blade (5A, 5B, 5C) at the respective time point by a separate data-driven model (DM1, DM2, DM3), where the predicted activity signal ($f_{AP}$, $f_{BP}$, $f_{CP}$) is an output value of the respective data-driven model (DM1, DM2, DM3) and where one or more activity signals ($f_A$, $f_B$, $f_C$) of blades (5A, 5B, 5C) other than the blade (5A, 5B, 5C) whose activity signal ($f_{AP}$, $f_{BP}$, $f_{CP}$) is the output value are input values of the respective data-driven model (5A, 5B, 5C) and where the respective data-driven model (DM1, DM2, DM3) has been learned by machine learning using training data comprising known input and output activity signals ($f_A$, $f_B$, $f_C$) occurred in the past during an undamaged state of the wind turbine (1);
   b) determining for each data-driven model (DM1, DM2, DM3) a residual ($re_A$, $re_B$, $re_C$) between the predicted activity signal ($f_{AP}$, $f_{BP}$, $f_{CP}$) and the detected activity signal ($f_A$, $f_B$, $f_C$);
   c) checking a threshold criterion for one or more variables ($va_1$, $va_2$, $va_3$), where the values of the one or more variables ($va_1$, $va_2$, $va_3$) depend on the residuals ($re_A$, $re_B$, $re_C$) for all data-driven models ($re_A$, $re_B$, $re_C$), where a threshold (TH1, TH2, TH3) is defined for each variable ($va_1$, $va_2$, $va_3$) and the threshold criterion is fulfilled if the value of any variable ($va_1$, $va_2$, $va_3$) exceeds the threshold (TH1, TH2, TH3) defined for this variable ($va_1$, $va_2$, $va_3$);
   d) determining an abnormal operation state (AS) of the turbine (1), if the threshold criterion is fulfilled.

2. The method according to claim 1, wherein the detected activity signals are blade frequencies ($f_A$, $f_B$, $f_C$) resulting from vibrations of the respective blades, preferably blade edge frequencies resulting from the vibrations in the edgewise direction of the respective blades (5A, 5B, 5C), the respective blade edge frequency ($f_A$, $f_B$, $f_C$) being preferably the fundamental frequency of the vibrations in the edgewise direction of the respective blade (5A, 5B, 5C).

3. The method according to claim 1 or 2, wherein the threshold (TH1, TH2, TH3) for a respective variable ($va_1$, $va_2$, $va_3$) depends on the standard deviation of a frequency distribution of a time series of values of the respective variable ($va_1$, $va_2$, $va_3$) in the past, where the threshold lies preferably between the standard deviation multiplied by two and the standard deviation multiplied by three.

4. The method according to one of the preceding claims, wherein the one or more input values of a respective data-driven model (DM1, DM2, DM3) comprise, additionally to the one or more detected activity signals ($f_A$, $f_B$, $f_C$) of blades (5A, 5B, 5C) other than the blade (5A, 5B, 5C) whose activity signal ($f_{AP}$, $f_{BP}$, $f_{CP}$) is the output value, one or more further environmental and/or operational parameters (EOV) of the wind turbine (1), particularly an ambient temperature around the wind turbine (1) and/or a power output of the wind turbine (1) and/or a rotating speed of the wind turbine rotor and/or an azimuth angle of the respective blade (5A, 5B, 5C) and/or a pitch angle of the respective blade (5A, 5B, 5C).

5. The method according to one of the preceding claims, wherein the respective data-driven models (5A, 5B, 5C) are based on Gaussian processes and/or a neural network structure.

6. The method according to one of the preceding claims, wherein an alarm is recorded and/or output via a user interface if an abnormal operation state (AS) of the turbine (1) is determined.

7. The method according to one of the preceding claims, wherein the one or more variables ($va_1$, $va_2$, $va_3$) processed in step c) correspond to the residuals ($re_A$, $re_B$, $re_C$) .

8. The method according to one of claims 1 to 6, wherein a trend removal (TR1, TR2, TR3) for removing a common trend in the time series of the residuals ($re_A$, $re_B$, $re_C$) is applied to the residuals ($re_A$, $re_B$, $re_C$) determined in step b), the result of the trend removal (TR1, TR2, TR3) being the one or more variables ($va_1$, $va_2$, $va_3$) processed in step c) .

9. The method according to claim 8, wherein the trend removal (TR1, TR2, TR3) is based on one or more cointegrating vectors, where the multiplication of the one or more cointegrating vectors with the residuals ($re_A$, $re_B$, $re_C$) determined in step b) results in the one or more variables ($va_1$, $va_2$, $va_3$), each cointegrating vector having been derived by cointegration applied to a time series of at least two residuals ($re_A$, $re_B$, $re_C$) for different data-driven models (DM1, DM2, DM3) occurred in the past during an undamaged state of the wind turbine (1).

10. The method according to claim 8, wherein the trend removal (TR1, TR2, TR3) is based on one or more transformations applied to the residuals ($re_A$, $re_B$, $re_C$) determined in step b) and resulting in the one or more variables ($va_1$, $va_2$, $va_3$), each transformation having been derived by a Principal Component Analysis applied to a time series of at least two residuals ($re_A$, $re_B$, $re_C$) for different data-driven models (DM1, DM2, DM3) occurred in the past during an undamaged state of the wind turbine (1).

11. The method according to one of claims 8 to 10, wherein all possible pairs of residuals ($re_A$, $re_B$, $re_C$) for different data-driven models (DM1, DM2, DM3) are each processed by a separate trend removal procedure.

12. A system for computer-implemented monitoring of a wind turbine (1), the wind turbine (1) comprising a tower (2), a nacelle (3), a hub (4) and a plurality of blades (5A, 5B, 5C), where for each blade (5A, 5B, 5c) an activity signal ($f_A$, $f_B$, $f_C$) of the blade (5A, 5B, 5C) is detected at subsequent time points, where the system is configured to perform for each time point of at least some of the subsequent time points a method comprising the following steps:

a) predicting an activity signal ($f_{AP}$, $f_{BP}$, $f_{CP}$) of each blade (5A, 5B, 5C) at the respective time point by a separate data-driven model (DM1, DM2, DM3), where the predicted activity signal ($f_{AP}$, $f_{BP}$, $f_{CP}$) is an output value of the respective data-driven model (DM1, DM2, DM3) and where one or more detected activity signal ($f_A$, $f_B$, $f_C$) of blades (5A, 5B, 5C) other than the blade (5A, 5B, 5C) whose activity signal ($f_{AP}$, $f_{BP}$, $f_{CP}$) is the output value are input values of the respective data-driven model (5A, 5B, 5C) and where the respective data-driven model (DM1, DM2, DM3) has been learned by machine learning using training data comprising known input and output activity signals ($f_A$, $f_B$, $f_C$) occurred in the past during a undamaged state of the wind turbine (1);
b) determining for each data-driven model (DM1, DM2, DM3) a residual ($re_A$, $re_B$, $re_C$) between the predicted activity signal ($f_{AP}$, $f_{BP}$, $f_{CP}$) and the detected activity signal ($f_A$, $f_B$, $f_C$);
c) checking a threshold criterion for one or more variables ($va_1$, $va_2$, $va_3$), where the values of the one or more variables ($va_1$, $va_2$, $va_3$) depend on the residuals ($re_A$, $re_B$, $re_C$) for all data-driven models ($re_A$, $re_B$, $re_C$), where a threshold (TH1, TH2, TH3) is defined for each variable ($va_1$, $va_2$, $va_3$) and the threshold criterion is fulfilled if the value of any variable ($va_1$, $va_2$, $va_3$) exceeds the threshold (TH1, TH2, TH3) defined for this variable ($va_1$, $va_2$, $va_3$);
d) determining an abnormal operation state (AS) of the turbine (1), if the threshold criterion is fulfilled.

13. The system according to claim 12, wherein the system is configured to perform a method according to one of claims 2 to 11.

14. A computer program product with program code, which is stored on a non-transitory machine-readable carrier, for carrying out a method according to one of claims 1 to 11 when the program code is executed on a computer.

15. A computer program with program code for carrying out a method according to one of claims 1 to 11 when the program code is executed on a computer.

FIG 1

FIG 2

FIG 3

Europäisches
Patentamt

European
Patent Office

Office européen
des brevets

# EUROPEAN SEARCH REPORT

Application Number

EP 19 15 6230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2015/345467 A1 (KRAMER BERTIN [DE]) 3 December 2015 (2015-12-03) * paragraphs [0011] - [0034], [0051] - [0080] * | 1-15 | INV. F03D17/00 |
| Y | EP 2 138 717 A2 (LANGE WILHELM [NO]) 30 December 2009 (2009-12-30) * paragraphs [0007] - [0021], [0031] - [0039] * | 1-15 | |
| A | X. WEI ET AL: "Sensor and actuator fault diagnosis for wind turbine systems by using robust observer and filter", WIND ENERGY, vol. 14, no. 4, 25 November 2010 (2010-11-25), pages 491-516, XP055330826, GB ISSN: 1095-4244, DOI: 10.1002/we.438 * the whole document * | 1-15 | |

TECHNICAL FIELDS
SEARCHED      (IPC)

F03D

The present search report has been drawn up for all claims

| Place of search | Date of completion of the search | Examiner |
|---|---|---|
| The Hague | 16 August 2019 | Libeaut, Laurent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 15 6230

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2019

| Patent document cited in search report | Publication date | Patent family member(s) | Publication date |
|---|---|---|---|
| US 2015345467 A1 | 03-12-2015 | CA 2899748 A1<br>DE 102013202261 A1<br>DK 2956661 T3<br>EP 2956661 A1<br>ES 2671792 T3<br>US 2015345467 A1<br>WO 2014124725 A1 | 21-08-2014<br>28-08-2014<br>25-06-2018<br>23-12-2015<br>08-06-2018<br>03-12-2015<br>21-08-2014 |
| EP 2138717 A2 | 30-12-2009 | DE 102008031816 A1<br>EP 2138717 A2 | 31-12-2009<br>30-12-2009 |

EPO FORM P0459

For more details about this annex : see Official Journal of the European Patent Office, No. 12/82

## REFERENCES CITED IN THE DESCRIPTION

**Patent documents cited in the description**

- US 20100209243 A1

**Non-patent literature cited in the description**

- Cointegration: a novel approach for the removal of environmental trends in structural health monitoring data. **CROSS ; ELIZABETH J. ; KEITH WORDEN ; QIAN CHEN.** Proceedings of the Royal Society of London A: Mathematical, Physical and Engineering Sciences. The Royal Society, 2011